# EUROPEAN PATENT APPLICATION

(11) **EP 2 555 119 A1**
(43) Date of publication of application: **06.02.2013**
(21) Application number: 11762722.4
(22) Date of filing: 25.03.2011
(51) Int. Cl.: G06F 13/00, G09F 19/18, G09F 21/04

(54) **OBJECT DISPLAYING SYSTEM AND OBJECT DISPLAYING METHOD**

(30) Priority: 14.03.2011 JP 2011055363; 30.03.2010 JP 2010078813
(71) Applicant: NS Solutions Corporation, Tokyo 104-8280 (JP)
(72) Inventor: IHARA, Noboru, Tokyo 104-8280 (JP); SASAO, Kazuhiro, Tokyo 104-8280 (JP); YOKOYAMA, Masaru, Tokyo 104-8280 (JP); SAKURAI, Arata, Tokyo 104-8280 (JP); SHIMODA, Osamu, Tokyo 104-8280 (JP)
(74) Representative: Vossius & Partner
(86) International application number: PCT/JP2011/057447
(87) International publication number: WO 2011/122491

(57) **Abstract**

Based on position information serving as a reference point of the moving body and acquired by a position information acquiring device, an object distributing device (1) specifies position information of each of a plurality of windows of a moving body, acquires, based on the pieces of specified position information, objects corresponding to the pieces of position information from a storage device (4), and distributes the acquired objects to object display devices (3) set on the corresponding windows, and the object display devices (3) installed on the respective windows display the distributed objects in a superimposed manner on sceneries outside the windows, whereby the problem is solved.

## Description

### TECHNICAL FIELD

The present invention relates to an object display system and an object display method.

### BACKGROUND ART

To put up signboards along railroads of public transportation facilities has been conventionally in practice as a form of advertisement media. For example, by setting up a signboard at a place seen from windows of trains, the signboard catches the attention of many customers, which enables effective advertisement and introduction of sightseeing areas.
However, the advertisement of such a signboard type has the following problems.
- Since the signboard is fixedly put up, it is difficult to frequently change its contents, and the frequent change would require high maintenance cost. There are some whose contents can be changed such as an electric sign type, but if the number becomes large, the influence of cost is larger than that of the signboard.
- It is possible to make everyone see only the same advertisement at the same timing.
- To display a signboard also at night requires illumination expenses and so on, leading to a cost increase. Moreover, in a snowy area, it cannot be seen even in the daytime if it is buried in the snow. This is an unavoidable problem of both the fixed-type signboard and the electric sign.
Therefore, there has been proposed a mechanism in which, for example, each user's behavior is analyzed, and an advertisement regarding a station that the user often uses for getting on and off is displayed on a mobile phone of the user, as in Prior Art Literature 1.

### CITATION LIST

### PATENT LITERATURE

Patent Literature 1: Japanese Patent No. 4205501

### SUMMARY OF INVENTION

### TECHNICAL PROBLEM

However, in the case of such a mechanism of Prior Art Literature 1, only the advertisement near the station where to get on and off trains is provided and, for example, an advertisement regarding a station that the user only passes and an advertisement not relating to an area along the railroad are not displayed, and improvement of the advertisement effect is not expected. Especially, an advertisement of an area visited for the first time for sightseeing or the like is not displayed, which is a loss of chance not only for an advertiser but is a loss of chance for obtaining information also for a user side.

Some advertiser wants the display exhibiting an advertisement effect even if advertisement cost increases, but as described above, the conventional fixed signboard has a problem of not capable of providing the advertisement to limited targets for whom the advertisement is intended. That is, the conventional signboard advertisement not only has a problem that physically only one signboard can be set up at the same place but also has a problem to be technically solved, as in an electric sign, that power is uselessly consumed and the display is not possible due to the influence of natural environment such as weather, even though the display contents can be changed.

The present invention was made in consideration of such problems and has an object to provide a technique presenting an appropriate advertisement, area information, and so on to users at low cost and/or efficiently.

### SOLUTION TO PROBLEM

Therefore, the present invention is an object display system in which a position information acquiring device which acquires position information serving as a reference point of a moving body, an object storage device which stores objects that are to be displayed on a plurality of object display devices installed on a plurality of windows of the moving body, in correspondence to pieces of display position information of the objects, an object distributing device which distributes the objects stored in the object storage device to the plural object display devices, and the plural object display devices are connected via a network, wherein: the object distributing device specifies position information of each of the plural windows of the moving body based on the position information serving as the reference point of the moving body and acquired by the position information acquiring device, specifies fields of view from the respective windows based on the pieces of specified position information, acquires the objects that are to be displayed on the specified fields of view, from the storage device based on the specified fields of view and the pieces of display position information, and distributes the acquired objects to the object display devices installed on the corresponding windows; and the object display devices installed on the respective windows display the distributed objects in a superimposed manner on sceneries outside the windows.
This object display system corresponds to, for example, an object display system of a later-described embodiment 1 or the like.

Further, the present invention is an object display system in which a position information acquiring device which acquires position information serving as a reference point of a moving body, an object storage device which stores objects that are to be displayed on a plurality of object display devices installed on a plurality of windows of the moving body, in correspondence to pieces of display position information of the objects, an object distributing device which distributes the objects stored in the object storage device to the plural object display devices, and the plural object display devices are connected via a network, wherein: the object distributing device specifies position information of the first window in terms of a travelling direction of the moving body out of the plural windows of the moving body, based on the position information serving as the reference point of the moving body and acquired by the position information acquiring device, specifies a field of view from the window based on the specified position information, acquires the object that is to be displayed on the specified field of view, from the storage device based on the specified field of view and the display position information, distributes the acquired object to the object display device installed on the window, and according to speed information of the moving body, distributes the object distributed to the object display device installed on the first window, sequentially to the object display devices installed on the windows in the rearward of the window in terms of the travelling direction; and the object display devices installed on the respective windows display the distributed object in a superimposed manner on sceneries outside the windows.
This object display system corresponds to, for example, an object display system of a later-described embodiment 6 or the like.

Further, the present invention is an object display system in which a position information acquiring device which acquires position information serving as a reference point of a moving body, an object storage device which stores objects in correspondence to pieces of display position information based on which the objects are displayed on a plurality of windows of the moving body respectively, a plurality of projecting devices which correspond to the respective windows and project the objects onto the windows to make the objects displayed, and an object distributing device which distributes the objects stored in the object storage device to the plural projecting devices are connected via a network, wherein: the object distributing device specifies position information of each of the plural windows of the moving body based on the position information serving as the reference point of the moving body and acquired by the position information acquiring device, specifies fields of view from the respective windows based on the pieces of specified position information, acquires the objects that are to be displayed on the specified fields of view, from the storage device based on the specified fields of view and the pieces of display position information, and distributes the acquired objects to the projecting devices which project the objects onto the corresponding windows; and the plural projecting devices project the distributed objects onto the corresponding windows to make the objects displayed in a superimposed manner on sceneries outside the windows.
This object display system corresponds to, for example, an object display system of a later-described embodiment 7 or the like.

Further, the present invention is an object display system in which a position information acquiring device which acquires position information serving as a reference point of a moving body, an object storage device which stores objects in correspondence to pieces of display position information based on which the objects are displayed on a plurality of windows of the moving body, a plurality of projecting devices which correspond to the respective windows and project the objects onto the windows to make the object displayed, and an object distributing device which distributes the objects stored in the object storage device to the plural projecting devices are connected via a network, wherein: the object distributing device specifies position information of the first window in terms of a travelling direction of the moving body out of the plural windows of the moving body, based on the position information serving as the reference point of the moving body and acquired by the position information acquiring device, specifies a field of view from the window based on the specified position information, acquires the object that is to be displayed on the specified field of view, from the storage device based on the specified field of view and the display position information, distributes the acquired object to the projecting device which projects the object onto the window, and according to speed information of the moving body, distributes the object distributed to the object display device installed on the first window, sequentially to the projecting devices which project the object onto the windows in the rearward of the window in terms of the travelling direction; and the plural projecting devices project the distributed object onto the corresponding windows to make the object displayed in a superimposed manner on sceneries outside the windows.
This object display system corresponds to, for example, an object display system of a later-described embodiment 8 or the like.

### ADVANTAGEOUS EFFECTS OF INVENTION

According to the present invention, it is possible to provide a technique presenting an appropriate advertisement, area information, and so on to users at low cost and/or efficiently.

### BRIEF DESCRIPTION OF DRAWINGS

Fig. 1 is a view showing an example of a system configuration of an object display system of an embodiment 1.
Fig. 2 is a diagram showing an example of a hardware configuration of an object distributing device.
Fig. 3 is a diagram showing an example of a hardware configuration of an object display device.
Fig. 4 is a diagram showing an example of a software configuration of the object distributing device.
Fig. 5 is a diagram showing an example of a software configuration of the object display device.
Fig. 6 is a sequence chart showing an example of processes in the object display system of the embodiment 1.
Fig. 7 is a view showing examples of the display of an object in the embodiment 1.
Fig. 8A is a view showing an example of the display of an object in an embodiment 3 (No. 1).
Fig. 8B is a view showing an example of the display of an object in the embodiment 3 (No. 2) .
Fig. 9 is a view showing an example of the display of an object in an embodiment 4.
Fig. 10 is a view showing an example of the display of an object in an embodiment 5.
Fig. 11 is a view showing an example of a system configuration of an object display system of an embodiment 6.
Fig. 12 is a sequence chart showing an example of processes in the object display system of the embodiment 6.
Fig. 13 is a view showing an example of a system configuration of an object display system of an embodiment 7.
Fig. 14 is a diagram showing an example of a hardware configuration of an object projecting device.
Fig. 15 is a sequence chart showing an example of processes in the object display system of the embodiment 7.
Fig. 16 is a view showing an example of a system configuration of an object display system of an embodiment 8.
Fig. 17 is a sequence chart showing an example of processes in the object display system of the embodiment 8.
Fig. 18 is a view showing an example of a system configuration of an object display system of an embodiment 9.
Fig. 19 is a diagram showing an example of a hardware configuration of an object information managing device.
Fig. 20 is a diagram showing an example of a software configuration of the object information managing device.
Fig. 21 is a chart showing an example of object management information.
Fig. 22 is a sequence chart showing an example of processes in the object display system of the embodiment 9.

### DESCRIPTION OF EMBODIMENTS

Hereinafter, embodiments of the present invention will be described based on the drawings.

### <Embodiment 1>

Hereinafter, an embodiment 1 will be described.

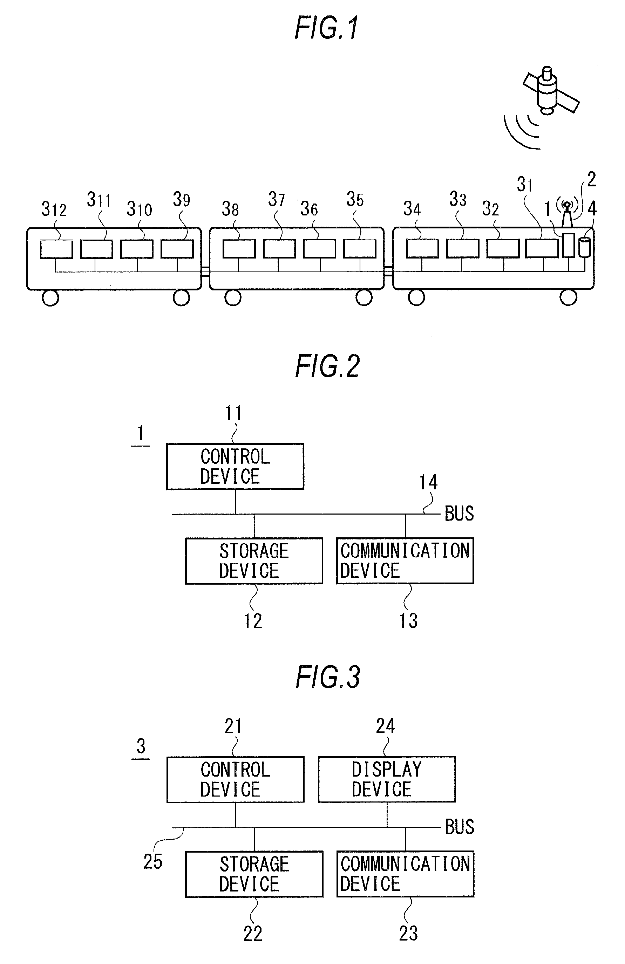

Fig. 1 is a view showing an example of a system configuration of an object display system of the embodiment 1. As shown in Fig. 1, in the object display system of the embodiment 1, a position information acquiring device 2 which acquires position information of a train being an example of a moving body, an object storage device 4 which stores objects that are to be displayed on a plurality of object display devices 3₁ to 3₁₂ installed on a plurality of windows of the train, in correspondence to pieces of display position information of the objects, an object distributing device 1 which distributes the objects stored in the object storage device 4 to the plural object display devices 3₁ to 3₁₂, and the plural object display devices 3₁ to 3₁₂ are connected via a network.
Here, the objects are, for example, advertisements or area information, and in the object storage device 4, the display contents of the objects, pieces of information on positions at which the objects are to be displayed (longitudes, latitudes), and so on are stored in correspondence to the objects that are to be displayed on the object display devices 3₁ to 3₁₂.
The position information acquiring device 2 is, for example, a GPS receiver or the like and communicates with a GPS satellite to acquire the position information (longitude, latitude) serving as a reference point of the train constantly (or at certain intervals (for example, at 0.1 second intervals)).
The object distributing device 1 specifies position information of each of the plural windows of the train based on the position information of the reference point of the train acquired by the position information acquiring device 2. To describe more concretely, the object distributing device 1 specifies the position information (longitude, latitude) of each of the plural windows based on information on a pre-determined relative positional relation between the reference point of the train and each of the windows and the position information of the reference point of the train acquired by the position information acquiring device 2.
The object distributing device 1 specifies fields of view from the respective windows based on the pieces of specified position information, acquires the objects that are to be displayed on the specified fields of view, from the object storage device 4 based on the specified fields of view and the pieces of display position information, and distributes the acquired objects to the object display devices 3₁ to 3₁₂ installed on the corresponding windows. When the objects are distributed, the object display devices 3 display the distributed objects in a superimposed manner on sceneries outside the windows. The object distributing device 1 is capable of performing this superimposed display by using what is called an augmented reality technique.
Strictly speaking, since the train runs not only while moving straight but while curving, the fields of view (facing directions) of the respective windows are specified with the use of the position information of the reference point of the train acquired by the position information acquiring device 2 and the longitude and latitude information of a train route, but for simplicity of the description, it will be hereinafter described that the pieces of position information of the plural windows of the train are specified based on the position information of the reference point of the train.

Fig. 2 is a diagram showing an example of a hardware configuration of the object distributing device 1.
As shown in Fig. 2, the object distributing device 1 has, as the hardware configuration, a structure that a control device 11, a storage device 12, and a communication device 13 are connected via a bus 14. The control device 11 is a CPU or the like and realizes the function of the object distributing device 1 by executing processes based on a program stored in the storage device 12 or the like. The storage device 12, which is a storage device such as RAM, ROM, or HDD, stores the program and stores data and so on used when the control device 11 executes the processes based on the program. The communication device 13 is a device controlling the communication of the object distributing device 1 with the position information acquiring device 2, the object storage device 4, and the object display devices 3₁ to 3₁₂.

Fig. 3 is a diagram showing an example of a hardware configuration of the object display device 3.
As shown in Fig. 3, the object display device 3 has, as the hardware configuration, a structure that a control device 21, a storage device 22, a communication device 23, and a display device 24 are connected via a bus 25. The control device 21 is a CPU or the like and realizes the function of the object display device 3 by executing processes based on a program stored in the storage device 22 or the like. The storage device 22, which is a storage device such as RAM, ROM, or HDD, stores the program and stores data and so on used when the control device 21 executes the processes based on the program. The communication device 23 is a device controlling the communication between the object display device 3 and the object distributing device 1. The display device 24 is a transmission-type liquid-crystal film or the like pasted on the window or the like of the train and displays the object under the control by the control device 21.

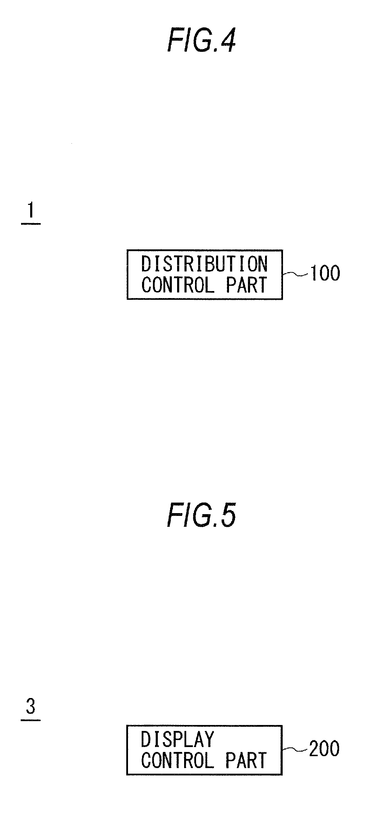

Fig. 4 is a diagram showing an example of a software configuration of the object distributing device 1.
As shown in Fig. 4, the object distributing device 1 includes a distribution control part 100 as the software configuration (functional configuration). The distribution control part 100 specifies the position information of each of the plural windows of the train based on the position information of the reference point of the train acquired by the position information acquiring device 2. Then, the distribution control part 100 specifies the fields of view from the respective windows based on the pieces of specified position information and acquires the objects that are to be displayed on the specified fields of view, from the object storage device 4 based on the specified fields of view and the pieces of display position information. The distribution control part 100 distributes the acquired objects to the object display devices 3₁ to 3₁₂ installed on the corresponding windows.
Fig. 5 is a diagram showing an example of a software configuration of the object display device 3.
As shown in Fig. 5, the object display device 3 includes a display control part 200 as the software configuration (functional configuration). The display control part 200 causes the display device 24 to display the object distributed from the object distributing device 1 to make the objet superimposed on the scenery outside the window.

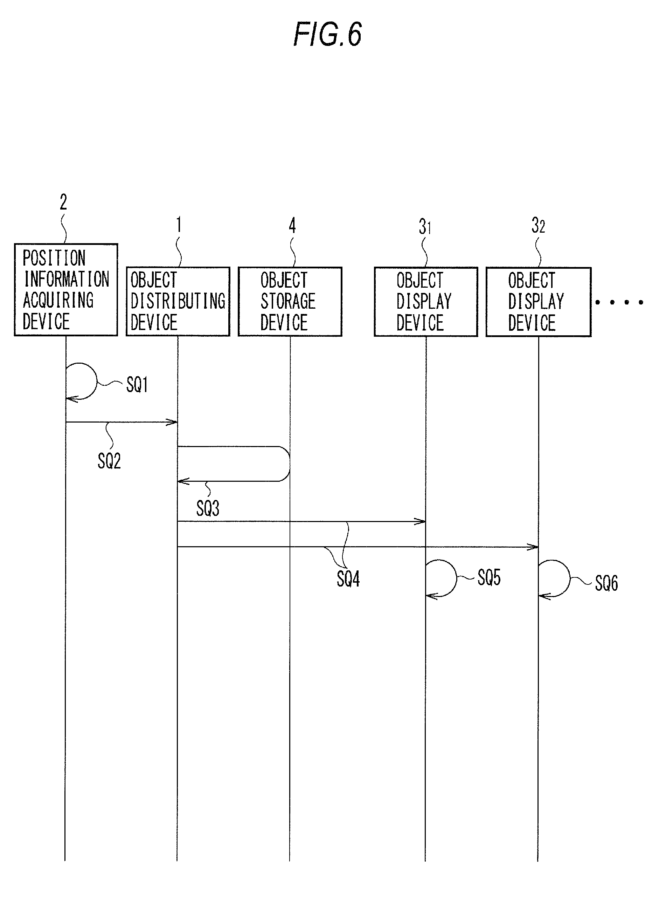

Fig. 6 is a sequence chart showing an example of processes in the object display system of the embodiment 1.
In Sequence SQ1, the position information acquiring device 2 communicates with the GPS satellite to acquire the position information (longitude, latitude) serving as the reference point of the train.
In Sequence SQ2, the position information acquiring device 2 transmits the acquired position information to the object distributing device 1.
In Sequence SQ3, the object distributing device 1 specifies the position information of each of the plural windows of the train based on the position information of the reference point of the train acquired by the position information acquiring device 2. The object distributing device 1 specifies the fields of view from the respective windows based on the pieces of specified position information and acquires the objects that are to be displayed on the specified fields of view, from the object storage device 4 based on the specified fields of view and the pieces of display position information. That is, the object distributing device 1 specifies the field of view from each of the windows and acquires the object that is to be displayed on the specified field of view based on the specified field of view and the display position information.
In Sequence SQ4, the object distributing device 1 distributes the acquired objects for the respective windows to the object display devices 3₁ to 3₁₂ installed on the respective windows.
In Sequence SQ5, the object display device 3₁ receiving the distribution of the object displays the object on the display device 24. Similarly, in Sequence SQ6, the object display device 3₂ receiving the distribution of the object displays the object on the display device 24.

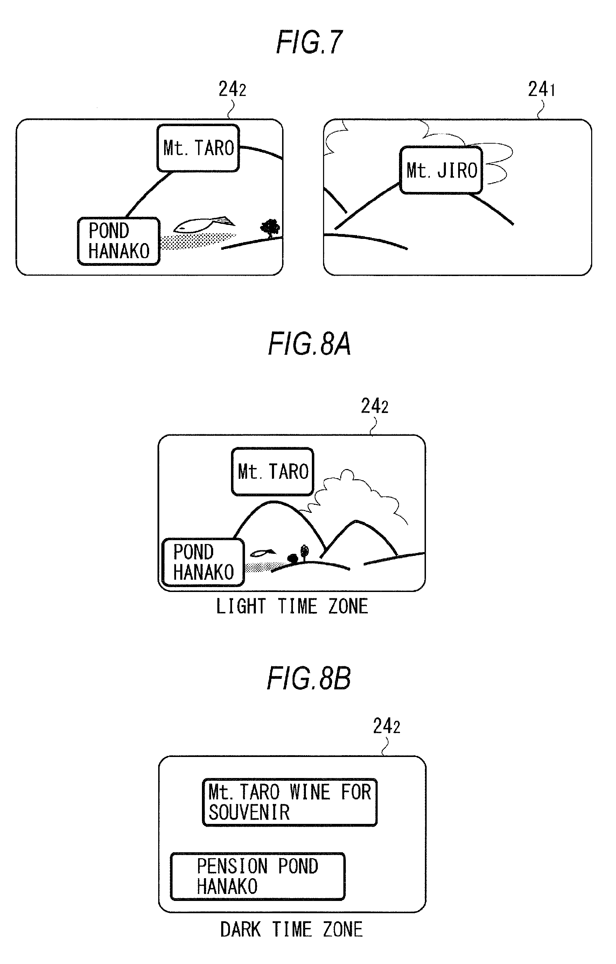

Fig. 7 is a view showing examples of the display of the object in the embodiment 1.
24₁ in Fig. 7 is the display device 24₁ (transmission-type liquid-crystal film pasted on the window) of the object display device 3₁ and is displaying area information "Mt. Jiro" in a superimposed manner on a mountain scenery outside the window.
24₂ in Fig. 7 is the display device 24₂ (transmission-type liquid-crystal film pasted on the window) of the object display device 3₂ and is displaying area information "Mt. Taro" in a superimposed manner on a mountain scenery outside the window and is displaying area information "Pond Hanako" in a superimposed manner on a pond scenery outside the window.
Incidentally, the object distributing device 1 specifies the position information of each of the plural windows of the train based on the position information serving as the reference point of the train and acquired by the position information acquiring device 2. Then, the object distributing device 1 specifies the fields of view from the respective windows based on the pieces of specified position information and acquires the objects that are to be displayed on the specified fields of view and the pieces of display position information stored in correspondence to the objects, from the object storage device 4 based on the specified fields of view and the pieces of display position information. The object distributing device 1 decides display positions of the objects in the fields of view based on the pieces of specified position information of the windows, the fields of view of the windows, and the pieces of acquired display position information of the objects. Then, the object distributing device 1 distributes the objects, which are acquired from the object storage device 4, and the display positions, to the object display devices 3₁ to 3₁₂ installed on the corresponding windows. The object display devices 3₁ to 3₁₂ display the distributed objects at the distributed display positions to superimpose the objects on the sceneries outside the windows. By doing so, it is possible to display, for example, the area information "Mt. Taro" in a superimposed manner on the scenery of Mt. Taro outside the window as shown in Fig. 7.
Further, when deciding the display positions of the objects, the object distributing device 1 may change the shapes of the objects each time by using the perspective, a reduction method, or the like according to the display positions corresponding to the positions of the windows and distribute the resultants to the object display devices 3.

As described above, according to this embodiment, since advertisements or area information are displayed on the windows, the display not influenced by the weather, the darkness during a time slot, and the like is enabled. Further, according to this embodiment, by rewriting the objects stored in the object storage device 4, it is possible to frequently change the contents of the advertisements or the area information. Further, according to this embodiment, it is possible to display an advertisement and so on even at places where signboards cannot be actually put up, such as, for example, to place tractors in line in the middle of a rice paddy and float a ship on the sea.

### <Embodiment 2>

Hereinafter, an embodiment 2 will be described. Note that in the embodiment 2, only what are different from the embodiment 1 will be described.
Object display devices 3 of this embodiment each have a display selection function. To describe more concretely, the object display devices 3 each cause a display device 24 to display a screen where to select the necessity or not of the display, age, purpose (business/sightseeing), hobby, and so on and transmit the result of the selection by a passenger to an object distributing device 1. The object distributing device 1 holds the selection results transmitted from the object display devices 3 corresponding to respective windows on per window basis (for each of the object display device 3 corresponding to the window).
Meanwhile, an object storage device 4 of this embodiment stores objects and pieces of display position information of the objects in correspondence to age, purpose (business/sightseeing), hobby, and so on being targets of the display of the objects.
When receiving position information serving as a reference point of a train from a position information acquiring device 2, the object distributing device 1 specifies position information of each of a plurality of windows of the train. Then, the object distributing device 1 specifies fields of view from the respective windows based on the pieces of specified position information and acquires objects that match the selected age, purpose, hobby, and so on and that are to be displayed on the fields of view, from the object storage device 4 based on the specified fields of view and the selection results on the respective windows. The object distributing device 1 distributes the objects acquired for the respective windows to the object display devices 3₁ to 3₁₂ installed on the corresponding windows.
As described above, according to this embodiment, the passenger can select whether the display is necessary or not. Further, according to this embodiment, it is possible to display an advertisement or the like more suitable for the passenger according to an attribute (or purpose) or the like of the passenger.

### <Embodiment 3>

Hereinafter, an embodiment 3 will be described. Note that in the embodiment 3, what are different from the above-described embodiments will be described.
Fig. 8A is a view showing an example of the display of an object in the embodiment 3 (No. 1). 24₂ in Fig. 8A, similarly to 24₂ in Fiq. 7, is a display device 24₂ (transmission-type liquid-crystal film pasted on a window) of an object display device 3₂ and is displaying area information "Mt. Taro" in a superimposed manner on a mountain scenery outside the window and is displaying area information "Pond Hanako" in a superimposed manner on a pond scenery outside the window. However, 24₂ in Fig. 8A is an example of the object that the display device 24₂ of the object display device 3₂ displays during a time slot when the outside is light.
Fig. 8B is a view showing an example of the display of an object in the embodiment 3 (No. 2).
24₂ in Fig. 8B, similarly to 24₂ in Fig. 8A, is the display device 24₂ (transmission-type liquid-crystal film pasted on the window) of the object display device 3₂. However, though 24₂ in Fig 8B has the scenery outside the window at the same position as that in 24₂ in Fig. 8A, it is an example of an object that the display device 24₂ of the object display device 3₂ displays during a time slot when the outside is dark.
That is, an object storage device 4 of this embodiment may store objects, display position information of each of the objects, and information on a time slot when to display each of the objects, in correspondence to one another. Then, an object distributing device 1 of this embodiment specifies position information of each of a plurality of windows of a train based on position information of a reference point of the train acquired by a position information acquiring device 2. The object distributing device 1 specifies fields of view from the respective windows based on the pieces of specified position information. Further, the object distributing device 1 acquires a present time from a clock device that it has or that another device in the train has, and acquires, from the object storage device 4, objects that are to be displayed on the specified fields of view at the present time.
As described above, according to this embodiment, it is possible to change objects displayed on the windows according to the time, as shown in Fig. 8A and Fig. 8B.

### <Embodiment 4>

Hereinafter, an embodiment 4 will be described. Note that in the embodiment 4, what are different from the above-described embodiments will be described.

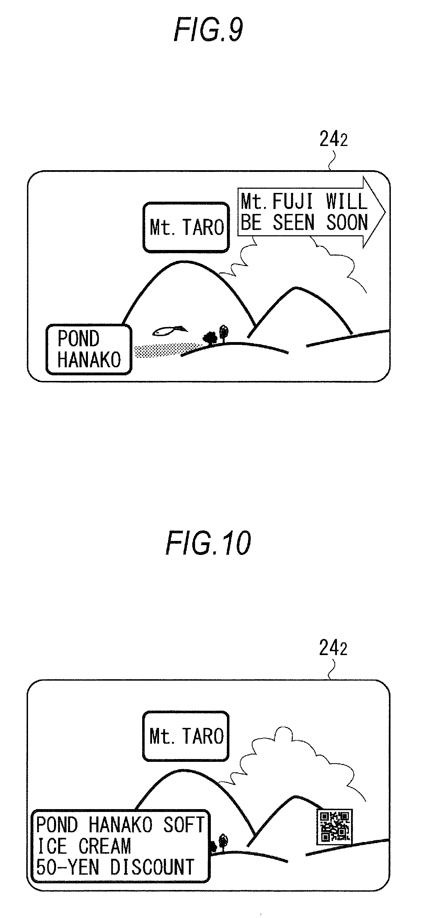

Fig. 9 is a view showing an example of the display of an object in the embodiment 4.
24₂ in Fig. 9, similarly to 24₂ in Fig.8A and 24₂ in Fig. 7, is a display device 24₂ (transmission-type liquid-crystal film pasted on a window) of an object display device 3₂ and is displaying area information "Mt. Taro" in a superimposed manner on a mountain scenery outside the window and is displaying area information "Pond Hanako" in a superimposed manner on a pond scenery outside the window. Further, as shown in Fig. 9, the display device 24₂ is displaying pre-notice information in a travelling direction saying that "Mt. Fuji will be seen soon".
Based on an object distributed to the object display device 3 installed on a window existing more in the travelling direction of a train than one window, out of a plurality of windows of the train, the object distributing device 1 of this embodiment decides the pre-notice information that is to be distributed to the object display device 3 installed on the aforesaid one window. Then, the object distributing device 1 distributes the decided pre-notice information to the object display device 3 installed on the aforesaid one window.
For example, when distributing area information "Mt. Fuji" to the object display device 3₁ installed on the window existing more in the travelling direction than the window where the object display device 3₂ is installed, the object distributing device 1 decides that the pre-notice information that is to be distributed to the object display device 3₂ is "Mt. Fuji will be seen soon". Then, to the object display device 3₂, the object distributing device 1 distributes "Mt. Taro" and "Pond Hanako" as the objects and also distributes "Mt. Fuji will be seen soon" as the pre-notice information.
The object display device 3₂ displays the distributed objects in a superimposed manner on a scenery outside the window and also displays the distributed pre-notice information as the pre-notice information in the travelling direction in a superimposed manner on the scenery as shown in Fiq. 9.

Incidentally, the object distributing device 1 may decide the pre-notice information that is to be distributed to the object display device 3 installed on the aforesaid one window, based on the object distributed to the object display device 3 installed on the window that exists more ahead in the train travelling direction than the one window by a predetermined number of windows, out of the plural windows of the train. Further, the object distributing device 1 may acquire speed information from the train, and when deciding the pre-notice information that is to be distributed to the object display device 3 installed on the one window, the object distributing device 1 may decide, according to the acquired speed information, the number of windows by which the window where the object display device 3 to which the object serving as the basis of the decision is distributed is more ahead in the travelling direction than the aforesaid one window. The object distributing device 1 decides the pre-notice information that is to be distributed to the object display device 3 installed on the one window, based on the object distributed to the object display device 3 installed on the window existing more ahead by the decided several number of windows. As described above, according to this embodiment, it is also possible to display the pre-notice information in the travelling direction.

### <Embodiment 5>

Hereinafter, an embodiment 5 will be described. Note that in the embodiment 5, what are different from the above-described embodiments will be described.
In the above-described embodiments, the description is given, taking the advertisement or the area information as examples of the object, but other examples of the object may be a coupon ticket, a two-dimensional code, and the like.
Fig. 10 is a view showing an example of the display of an object in the embodiment 5.
24₂ in Fig. 10, similarly to 24₂ in Fig. 9, 24₂ in Fig. 8A, and 24₂ in Fig. 7, is a display device 24₂ (transmission-type liquid-crystal film pasted on a window) of an object display device 3₂, and is displaying area information "Mt. Taro" in a superimposed manner on a mountain scenery outside the window, is displaying a coupon ticket saying "Pond Hanako soft ice cream 50-yen discount" in a superimposed manner on a pond scenery outside the window, and is displaying "two-dimensional code for accessing a homepage of Inn Mt. Taro" in a superimposed manner on the mountain scenery outside the window.
A passenger photographs the coupon ticket displayed on the display device 24 by, for example, a mobile phone or the like, saves its image, and presents the image to a clerk at a soft ice cream shop or the like near Pond Hanako, thereby capable of buying the Pond Hanako soft ice cream with a 50-yen discount. Further, by reading the two-dimensional code displayed on the display device 24 by, for example, a mobile phone or the like, the passenger can read information recorded in the two-dimensional code. For example, when the two-dimensional code includes URL, the passenger can access the URL by using the mobile phone or the like.

### <Embodiment 6>

Hereinafter, an embodiment 6 will be described. Note that in the embodiment 6, what are different from the above-described embodiments will be described.

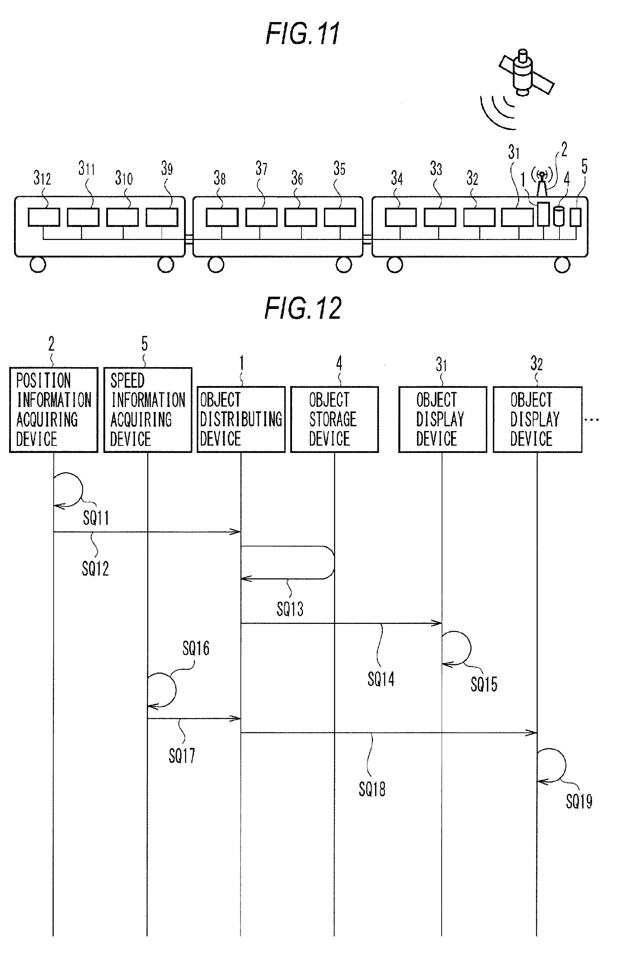

Fig. 11 is a view showing an example of a system configuration of an object display system of the embodiment 6. As shown in Fig. 11, the object display system of the embodiment 6 further includes, as the system configuration, a speed information acquiring device 5 which acquires speed information of a train, as compared with the object display system of the embodiment 1.
Based on position information being a reference point of the train acquired by a position information acquiring device 2, an object distributing device 1 of this embodiment specifies position information of the first window in terms of a travelling direction of the train out of a plurality of windows of the train. When there are windows both on left and right side surfaces of the train, the object distributing device 1 specifies the position information of the first window on each of the side surfaces and executes the following processes. Based on the specified position information of the first window, the object distributing device 1 specifies a field of view from the window, acquires an object that is to be displayed on the specified field of view, from an object storage device 4 based on the specified field of view and the display position information, distributes the acquired object to an object display device 3₁ installed on the window, and according to the speed information of the train acquired by the speed information acquiring device 5, also distributes the object distributed to the object display device 3₁ installed on the first window, sequentially to object display devices 3₂, 3₃, 3₄, ... installed on windows in the rearward of the window in terms of the travelling direction.
The object display devices 3 installed on the respective windows each display the distributed object in a superimposed manner on a scenery outside the window.

Fig. 12 is a sequence chart showing an example of the processes in the object display system of the embodiment 6.
In Sequence SQ11, the position information acquiring device 2 communicates with a GPS satellite to acquire the position information (longitude, latitude) serving as the reference point of the train.
In Sequence SQ12, the position information acquiring device 2 transmits the acquired position information to the object distributing device 1.
In Sequence SQ13, based on the position information of the reference point of the train received from the position information acquiring device 2, the object distributing device 1 specifies the position information of the first window in terms of the travelling direction of the train out of the plural windows of the train. The object distributing device 1 specifies the field of view from the first window based on the specified position information and acquires the object that is to be displayed on the specified field of view, from the object storage device 4 based on the specified field of view and the display position information.
In Sequence SQ14, the object distributing device 1 distributes the acquired object for the first window to the object display device 3₁ installed on the window.
In Sequence SQ15, the object display device 3₁ receiving the distribution of the object causes the display device 24 to display the object.
Meanwhile, in Sequence SQ16, the speed information acquiring device 5 measures and acquires the speed information of the train.
In Sequence SQ17, the speed information acquiring device 5 transmits the acquired speed information to the object distributing device 1.
In Sequence SQ18, according to the speed information of the train received from the speed information acquiring device 5, the object distributing device 1 distributes the object distributed to the object display device 3₁ of the first window, sequentially to the object display devices 3₂, ... installed on the windows in the rearward of the aforesaid window in terms of the travelling direction.
In Sequence SQ19, the object display device 3₂ receiving the distribution of the object causes the display device 24 to display the object.

As described above, according to the processes of this embodiment, the object distributing device 1 only needs to distribute the object sequentially to the object display devices 3 installed on the windows in the rearward in terms of the travelling direction, according to the speed of the train, and therefore, it is not necessary to specify the position of each of the windows and specify the fields of view seen from the respective windows, which can realize the above-described effects with a small calculation amount and a small memory capacity.
In this embodiment, the description is given by using the example where the speed information acquiring device 5 is included in the system configuration, but the speed information acquiring device 5 may be one customarily mounted on the train.

### <Embodiment 7>

Hereinafter, an embodiment 7 will be described. Note that in the embodiment 7, what are different from the above-described embodiments will be described.

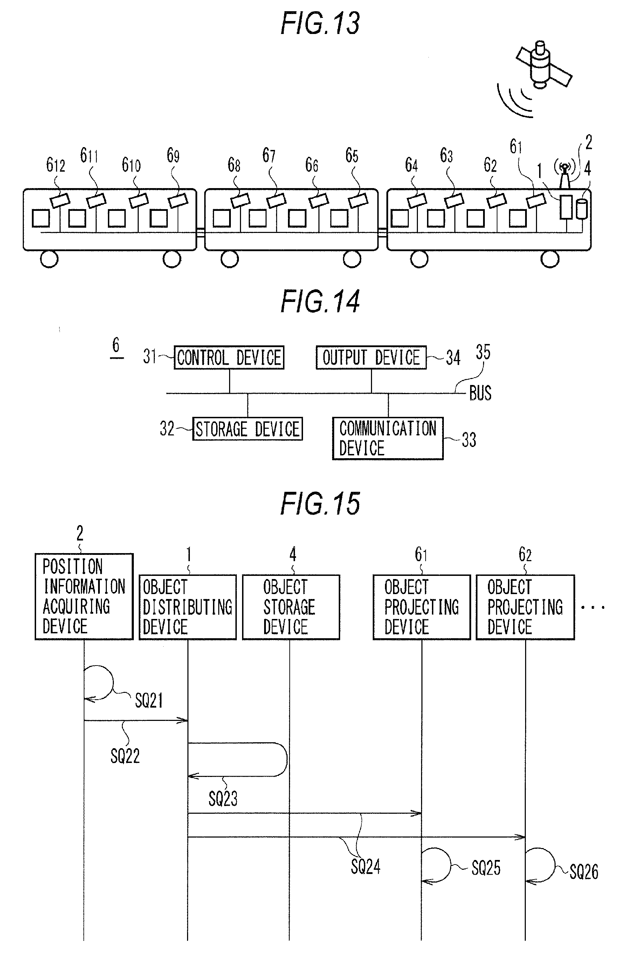

Fig. 13 is a view showing an example of a system configuration of an object display system of the embodiment 7. As shown in Fig. 13, in the object display system of the embodiment 7, a position information acquiring device 2 which acquires position information of a train being an example of a moving body, an object storage device which stores objects in correspondence to pieces of display position information based on which the objects are displayed on a plurality of windows of the train, a plurality of object projecting devices 6₁ to 6₁₂ corresponding to the respective windows, which project the objects onto the plural windows of the train to make the objects displayed, and an object distributing device 1 which distributes the objects stored in the object storage device 4 to the plural object projecting devices 6₁ to 6₁₂ are connected via a network.
The object distributing device 1 specifies position information of each of the plural windows of the train based on the position information of a reference point of the train acquired by the position information acquiring device 2. To described more concretely, the object distributing device 1 specifies the position information (latitudes, longitudes) of each of the plural windows based on information on a predetermined relative positional relations between the reference point of the train and each of the windows and the position information of the reference point of the train acquired by the position information acquiring device 2.
The object distributing device 1 specifies fields of view from the respective windows based on the pieces of specified position information, acquires objects that are to be displayed on the specified fields of view, from the object storage device 4 based on the specified fields of view and the pieces of display position information, and distributes the acquired objects to the object projecting devices 6 which project the acquired objects onto the corresponding windows.
The plural projecting devices 6₁ to 6₁₂ project the distributed objects onto the corresponding windows to make the objects displayed in a superimposed manner on sceneries outside the windows.

Fig. 14 is a diagram showing an example of a hardware configuration of the object projecting device 6.
As shown in Fig. 14, the object projecting device 6 has, as the hardware configuration, a structure that a control device 31, a storage device 32, a communication device 33, and an output device 34 are connected via a bus. The control device 31 is a CPU or the like and realizes the function of the object projecting device 6 by executing processes based on a program stored in the storage device 32 or the like. The storage device 32, which is a storage device such as RAM, ROM, or HDD, stores the program and stores data and so on used when the control device 31 executes the processes based on the program. The communication device 33 is a device controlling the communication between the object projecting device 6 and the object distributing device 1.

Fig. 15 is a sequence chart showing an example of the processes in the object display system of the embodiment 7.
In Sequence SQ21, the position information acquiring device 2 communicates with a GPS satellite to acquire the position information (longitude, latitude) serving as the reference point of the train.
In Sequence SQ22, the position information acquiring device 2 transmits the acquired position information to the object distributing device 1.
In Sequence SQ22, the position information acquiring device 2 transmits the acquired position information to the object distributing device 1.
In Sequence SQ23, the object distributing device 1 specifies the position information of reach of the plural windows of the train based on the position information of the reference point of the train acquired by the position information acquiring device 2. The object distributing device 1 specifies the fields of view from the respective windows based on the pieces of specified position information and acquires the objects that are to be displayed on the specified fields of view, from the object storage device 4 based on the specified fields of view and the pieces of display position information. That is, the object distributing device 1 specifies the field of view from each of the windows and acquires the object that is to be displayed on the specified field view, based on the specified field of view and the display position information.
In Sequence SQ24, the object distributing device 1 distributes the acquired objects for the respective windows to the object projecting devices 6₁ to 6₁₂ which project the objects onto the respective windows.
In Sequence SQ25, the object projecting device 6₁ receiving the distribution of the object projects the object onto the corresponding window to make the object displayed in a superimposed manner on the scenery outside the window. Similarly, in Sequence SQ26, the object projecting device 6₁ receiving the distribution of the object projects the object onto the corresponding window to make the object displayed in a superimposed manner on the scenery outside the window.

As described above, it is possible to realize the effects shown in the above-described embodiments also by projecting the object onto the window (for example, a window on which a low-reflection film is pasted or the like) as shown in this embodiment.
In this embodiment, the description is given by using the structure that one window has one object projecting device 6, but this does not limit this embodiment. One object projecting device 6 may project an object onto the plural windows.

### <Embodiment 8>

Hereinafter, an embodiment 8 will be described. Note that in the embodiment 8, what are different from the above-described embodiments will be described.

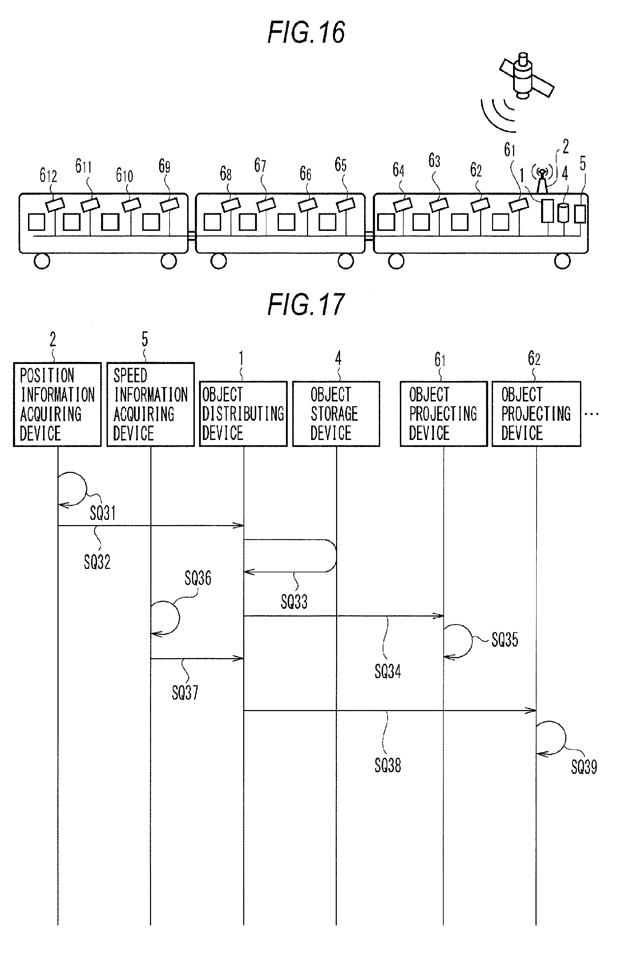

Fig. 16 is a view showing an example of a system configuration of an object display system of the embodiment 8. As shown in Fig. 16, the object display device of the embodiment 8 further includes, as the system configuration, a speed information acquiring device 5 which acquires speed information of a train, as compared with the object display system of the embodiment 7.
Based on position information of a reference point of the train acquired by a position information acquiring device 2, an object distributing device 1 of this embodiment specifies position information of the first window in terms of a travelling direction of the train out of a plurality of windows of the train. When there are windows both on left and right side surfaces, the object distributing device 1 specifies the position information of the first window on each of the side surfaces and executes the following processes. Based on the specified position information of the first window, the object distributing device 1 specifies a field view from the window, acquires an object that is to be displayed on the specified field of view, from an object storage device 4 based on the specified field of view and the display position information, distributes the acquired object to an object projecting device 6₁ which projects the object onto the window, and according to the speed information of the train acquired by the speed information acquiring device 5, it also distributes the object distributed to the object projecting device 6₁ which projects the object onto the first window, sequentially to object projecting devices 6₂, 6₃, 6₄, ... which project the object onto the windows in the rearward of the aforesaid window in terms of the travelling direction.
The object projecting devices 6₁ to 6₁₂ which project the object onto the respective windows project the distributed object onto the corresponding windows to make the object displayed in a superimposed manner on sceneries outside the windows.

Fig. 17 is a sequence chart showing an example of the processes in the object display system of the embodiment 8.
In Sequence SQ31, the position information acquiring device 2 communicates with a GPS satellite to acquire the position information (longitude, latitude) serving as the reference point of the train.
In Sequence SQ32, the position information acquiring device 2 transmits the acquired position information to the object distributing device 1.
In Sequence SQ33, the object distributing device 1 specifies the position information of the first window in terms of the travelling direction of the train out of the plural windows of the train, based on the position information of the reference point of the train received from the position information acquiring device 2. The object distributing device 1 specifies the field of view from the first window based on the specified position information and acquires the object that is to be displayed on the specified field view, from the object storage device 4 based on the specified field of view and the display position information.
In Sequence SQ34, the object distributing device 1 distributes the acquired object for the first window to the object projecting device 6₁ which projects the object onto this window.
In Sequence SQ35, the object projecting device 6₁ receiving the distribution of the object projects the distributed object onto the corresponding window to make the object displayed in a superimposed manner on the scenery outside the window.
Meanwhile, in Sequence SQ36, the speed information acquiring device 5 constantly measures and acquires the speed information of the train.
In Sequence SQ37, the speed information acquiring device 5 constantly transmits the acquired speed information to the object distributing device 1.
In Sequence SQ38, according the speed information of the train received from the speed information acquiring device 5, the object distributing device 1 distributes the object distributed to the object projecting device 6₁ which projects the object onto the first window, sequentially to the object projecting devices 6₂ ... which project the object onto the windows in the rearward of the aforesaid window in terms of the travelling direction.
In Sequence SQ39, the object projecting devices 6₂ ... receiving the distribution of the object project the distributed object onto the corresponding windows to make the object displayed in a superimposed manner on the sceneries outside the windows.

As described above, according to this embodiment, it is possible to realize the above-described effects with a smaller calculation amount and a smaller memory capacity than those of the method of the embodiment 7.
Incidentally, in this embodiment, the description is given by using the structure that one window has one object projecting device 6, but this does not limit this embodiment. One object projecting device 6 may project the object onto the plural windows.
Further, in this embodiment, the description is given by using the example where the speed information acquiring device 5 is included in the system configuration, but the speed information acquiring device 5 may be one customarily mounted on the train.

### <Embodiment 9>

Hereinafter, an embodiment 9 will be described. Note that in the embodiment 9, what are different from the above-described embodiments will be described.

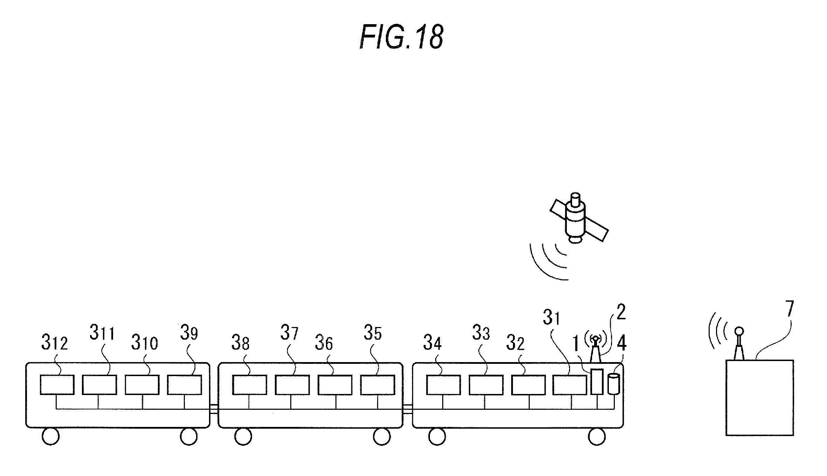

Fig. 18 is a view showing an example of a system configuration of an object display system of the embodiment 9. As shown in Fig. 18, the object display system of the embodiment 9 further includes, as the system configuration, an object information management device 7 which manages object information, as compared with the object display systems of the other embodiments. The object information managing device 7 is a device for collectively managing objects that are to be stored in an object storage device 4. The object information managing device 7 and an object distributing device 1 communicate with each other via a wired or wireless network.

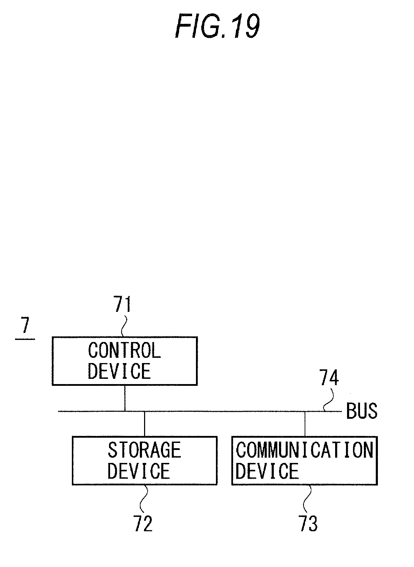

Fig. 19 is a diagram showing an example of a hardware configuration of the object information managing device 7.
As shown in Fig. 19, the object information managing device 7 has, as the hardware configuration, a structure that a control device 71, a storage device 72, and a communication device 73 are connected via a bus 74. The control device 71 is a CPU or the like and realizes the function of the object information managing device 7 by executing processes based on a program stored in the storage device 72 or the like. The storage device 72, which is a storage device such as RAM, ROM, or HDD, stores the program and stores data and so on used when the control device 71 executes the processes based on the program. The communication device 73 is a device controlling the communication of the object information managing device 7 with the object storage device 4 and so on.

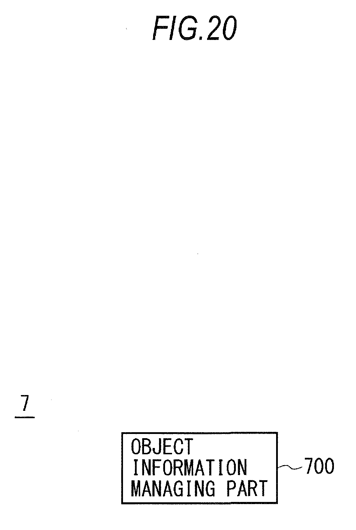

Fig. 20 is a diagram showing an example of a software configuration of the object information managing device 7.
As shown in Fig. 20, the object information managing device 7 includes an object information managing part 700 as the software configuration (functional configuration).
Next, the function of the object information managing part 700 will be described. The object information managing part 700 manages the display contents, a display position, and so on as master data on per object basis. The information managed by this object information managing part 700 is given to object distribution devices 1 disposed on respective trains via the communication device 73 and the communication device 13. Further, the object information managing part 700 has a function of receiving usage states of objects in the object distribution devices 1 disposed on the respective trains via the communication device 13 and the communication device 73 and storing them, which will be described later in detail.

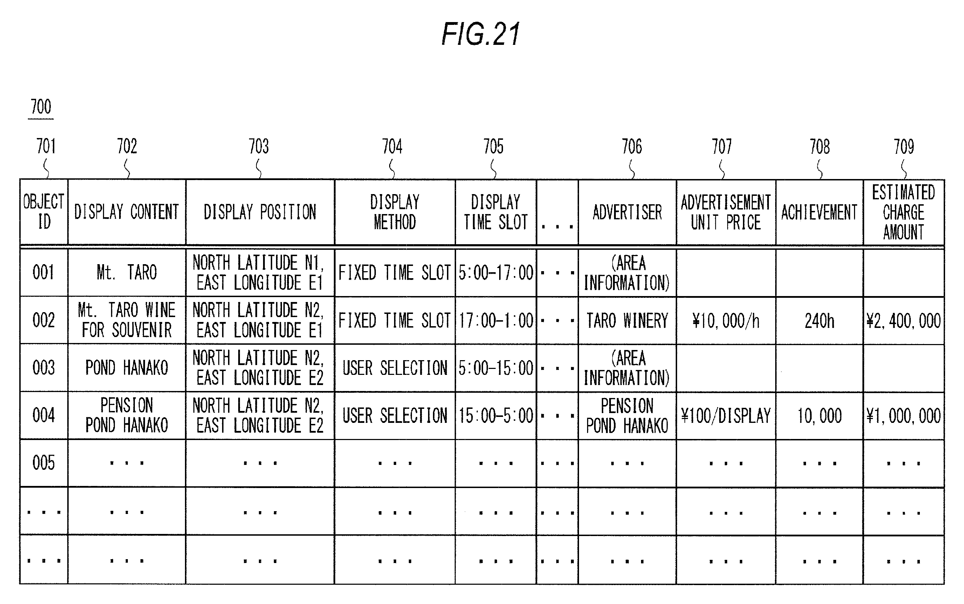

Fig. 21 is a chart showing an example of the object management information stored in the storage device 72. The object managing part 700 records and updates the following pieces of information as the object management information. Object ID 701 is an identifier for uniquely specifying an object to be displayed. Display content 702 is the content of the object that is to be displayed on the object display device 3 disposed on the train and is stored as character string information or image information. As position information 703, information regarding at which position in real space, the object is to be displayed is stored as, for example, latitude and longitude. Display method 704 and display time slot 705 are information defining how and when to display, and for example, in a case of the combination of "fixed time slot" and "5:00 - 17:00", the object set in the display content 702 is constantly displayed during this time slot. Further, as for the combination of "user selection" and "5:00 - 15:00", when a passenger can select an object as described in the embodiment 2, the object is displayed during this time slot if it matches a condition selected by the passenger. Incidentally, in this case, as the object management information, the object information managing part 700 further stores pieces of attribute information such as "target age group, "purpose of riding", "hobby", and so on, which are not shown in Fig. 21.
Advertiser 706 is information regarding who is an advertiser and if an object to be displayed is merely the name of, for example, a mountain, a river, or the like, there is no advertiser, and this column may be blank. Advertisement unit price 707 is information defining how to decide unit price when an advertiser is charged for an advertisement expense. Information on unit price per hour, unit price per each time an object selected by a user is actually displayed, or the like is set as the advertisement unit price 707. The above pieces of object management information are input in advance as data. The advertisement cost 707 is an example of the unit price information.
Achievement 708 is information recording, for example, object display achievement per month and is stored/updated every time the receipt from the object distributing device 1 takes place. Further, as estimated charge amount 709, for example, an estimated charge amount per month found by predetermined calculation from the advertisement unit price 707 and the achievement 708 is stored. The achievement 708 is an example of achievement information. The estimated charge amount 709 is an example of a charge amount.

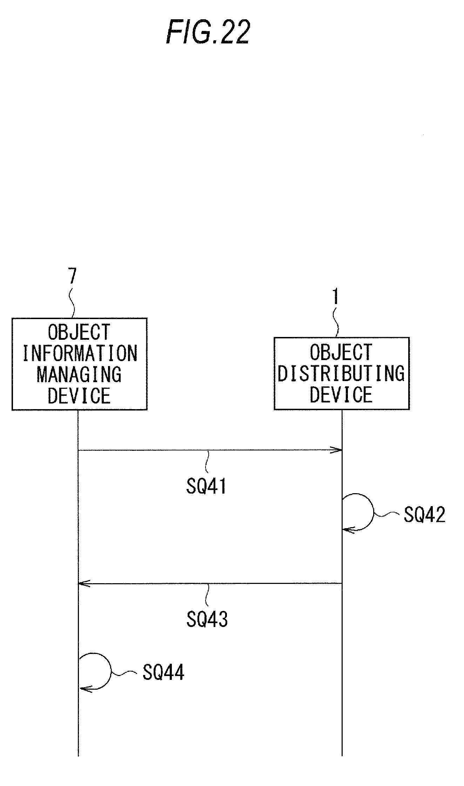

Fig. 22 is a sequence chart showing an example of only processes between the object information managing device 7 and the object distributing device 1, out of the processes in the object display system of the embodiment 9. A description of the processes in the object distributing device 1 will be omitted since those in the above-described embodiments 1 to 8 may be applied. In Sequence SQ41, the object information managing device 7 transmits attribute information based on which the display condition is to be determined, such as the object ID 701, the display content 703, the display method 704, and the display time slot 705 which are input in advance as data, out of the above-described pieces of object management information, to the object distributing devices 1 of the respective trains via the network.
In Sequence SQ42, the object distributing devices 1 of the respective trains each perform the display control of an object in various manners shown in the embodiments 1 to 8.
In Sequence SQ43, the object distributing devices 1 of the respective trains each transmit an achievement value of each of the displayed objects to the object information managing device 7 via the network. A timing and a cycle for performing this sequence SQ43 can be arbitrarily set by a manager or the like. For example, the timing and the cycle may be once per day or every time the train stops at a station.
In Sequence SQ44, the object information managing device 7 calculates the estimated charge amount from the advertisement unit price 707 and the achievement 708 by using a predetermined arithmetic expression. For example, to described taking the object ID: 002 in Fig. 21 as an example, the advertisement is displayed for eight hours from 17:00 every day up to 1:00 next day and the advertisement unit price is 10,000 yen per hour, and therefore, if the advertisement is displayed for thirty days, the estimated charge mount is calculated as: 10,000 (yen) × 8 (hours) × 30 (days) = 2,400,000 (yen). Incidentally, in actual practice, when calculating this estimated charge amount, the object information managing device 7 sums the achievement values on the respective trains to calculate this for each advertiser.

In this embodiment, for simplicity of the description, the display method and the display time slot of the objects ID 001 to 004 do not overlap, but in the case of the display method of the user selection type, it is also possible to set a plurality of advertisements in the same period zone and at the same display position.
According to this embodiment, it is possible to set the advertisement expense for each advertisement and to calculate the advertisement expense according to its display achievement, and therefore, for the advertiser, it is possible to display the advertisement only during the necessary time slot and display the advertisement to a selected desired target (passenger), which makes it possible to avoid spending the advertisement expense uselessly.

According to the above-described embodiments, it is possible to provide a technique presenting an appropriate advertisement, area information, and the like to users at low cost and/or efficiently.

In the foregoing, the preferable embodiments of the present invention are described in detail, but the present invention is not limited to such specific embodiments and can be variously modified or changed within the scope of the spirit of the present invention described in the claims.
For example, in the above-described embodiments, the positions of the plural windows of the train are found based on the position information of the reference point of the train received from the position information acquiring device 2, but the position information acquiring device 2 may be provided on each car of the train and the positions of the plural windows may be found based on a reference point of each of the cars, or the position information acquiring device 2 may be provided near each of the windows and the position of each of the windows may be specified.
Further, besides the above-described embodiments, the object may be displayed in a superimposed manner on a real-time image photographed by a camera provided on a top car of the train, for instance. In this case, a possible structure is that, based on the position information of the reference point of the train received from the position information acquiring device 2, an object to be displayed on a field of view of the camera image is acquired from the object storage device 4, and the object is displayed on a liquid-crystal display or the like provided on each car or each seat. At this time, the similar embodiments can be adopted, for example, it is possible to change the displayed contents depending on the time slot or to select the displayed contents by a passenger as in the above-described embodiments.
Note that, though the train is taken as an example in the description in the above-described embodiments, but these embodiments are applicable to any moving body including windows.
Note that the above-described embodiments may be carried out in arbitrary combination.
Note that, as described-above, the objects are, for example, any of or all of an advertisement, area information, a coupon ticket, and a two-dimensional code, or the combination of arbitrary ones among these. Further, in the above-described embodiments, the description is given in which the displayed object is an advertisement with a character string or area information, but the object is not limited to the character string and may be image information such as graphics and a photograph, and the image information may be a still image or a moving image.

### INDUSTRIAL APPLICABILITY

It is applied to a technique displaying objects on windows of a moving body.

## Claims

1. An object display system in which a position information acquiring device which acquires position information serving as a reference point of a moving body, an object storage device which stores objects that are to be displayed on a plurality of object display devices installed on a plurality of windows of the moving body, in correspondence to pieces of display position information of the objects, an object distributing device which distributes the objects stored in the object storage device to the plural object display devices, and the plural object display devices are connected via a network, wherein:
the object distributing device specifies position information of each of the plural windows of the moving body based on the position information serving as the reference point of the moving body and acquired by the position information acquiring device, specifies fields of view from the respective windows based on the pieces of specified position information, acquires the objects that are to be displayed on the specified fields of view, from the storage device based on the specified fields of view and the pieces of display position information, and distributes the acquired objects to the object display devices installed on the corresponding windows; and
the object display devices installed on the respective windows display the distributed objects in a superimposed manner on sceneries outside the windows.

2. The object display system according to claim 1, wherein:
based on the pieces of specified position information of the windows, the fields of view of the windows, and the pieces of display position information of the objects acquired from the storage device, the object distributing device decides display positions of the objects in the fields of view, and distributes the objects acquired from the storage device and the display positions of the objects to the object display devices installed on the corresponding windows; and
the object display devices installed on the respective windows display the distributed objects at the distributed display positions to display the objects in the superimposed manner on the sceneries outside the windows.

3. The object display system according to claim 1, wherein:
the object storage device stores the objects, the pieces of display position information, and pieces of information on time slots when to display the objects in correspondence to one another; and
the object distributing device acquires, from the storage device, the objects that are to be displayed on the specified fields of view at a present time, and distributes the acquired objects to the object display devices installed on the corresponding windows.

4. The object display system according to claim 1, wherein:
based on the object that is distributed to the object display device installed on a window existing in a travelling direction of one window out of the plural windows, the object distributing device decides pre-notice information that is to be distributed to the object display device installed on the one window and distributes the decided pre-notice information to the object display device installed on the one window; and
the object display device displays the distributed object in the superimposed manner on the scenery outside the window and displays the distributed pre-notice information as pre-notice information in the travelling direction in the superimposed manner on the scenery.

5. The object display system according to claim 1, wherein the objects are any of or all of an advertisement, area information, a coupon ticket, and a two-dimensional code.

6. The object display system according to claim 1, further comprising an object information managing device which manages object information containing attribute information indicating a display condition of each of the objects, wherein:
the object information managing device transmits the attribute information to the object distributing device; and
when the display conditions indicated by the attribute information are satisfied, the object distributing device distributes the objects to the object display devices installed on the corresponding windows.

7. The object display system according to claim 6, wherein:
the object information further contains unit price information of the display of each of the objects;
the object distributing device transmits achievement information indicating display achievement of the object to the object information managing device; and
the object information managing device stores the achievement information of the objects received from the object distributing device on per object basis, and calculates a charge amount on per object basis, based on the achievement information and the display unit price information.

8. An object display system in which a position information acquiring device which acquires position information serving as a reference point of a moving body, an object storage device which stores objects that are to be displayed on a plurality of object display devices installed on a plurality of windows of the moving body, in correspondence to pieces of display position information of the objects, an object distributing device which distributes the objects stored in the object storage device to the plural object display devices, and the plural object display devices are connected via a network, wherein:
the object distributing device specifies position information of the first window in terms of a travelling direction of the moving body out of the plural windows of the moving body, based on the position information serving as the reference point of the moving body and acquired by the position information acquiring device, specifies a field of view from the window based on the specified position information, acquires the object that is to be displayed on the specified field of view, from the storage device based on the specified field of view and the display position information, and distributes the acquired object to the object display device installed on the window, and according to speed information of the moving body, distributes the object distributed to the object display device installed on the first window, sequentially to the object display devices installed on the windows in the rearward of the window in terms of the travelling direction; and
the object display devices installed on the respective windows display the distributed object in a superimposed manner on sceneries outside the windows.

9. An object display system in which a position information acquiring device which acquires position information serving as a reference point of a moving body, an object storage device which stores objects in correspondence to pieces of display position information based on which the objects are displayed on a plurality of windows of the moving body respectively, a plurality of projecting devices which correspond to the respective windows and project the objects onto the windows to make the objects displayed, and an object distributing device which distributes the objects stored in the object storage device to the plural projecting devices are connected via a network, wherein:
the object distributing device specifies position information of each of the plural windows of the moving body based on the position information serving as the reference point of the moving body and acquired by the position information acquiring device, specifies fields of view from the respective windows based on the specified position information, acquires the objects that are to be displayed on the specified fields of view, from the storage device based on the specified fields of view and the pieces of display position information, and distributes the acquired objects to the projecting devices which project the objects onto the corresponding windows; and
the plural projecting devices project the distributed objects onto the corresponding windows to make the objects displayed in a superimposed manner on sceneries outside the windows.

10. An object display system in which a position information acquiring device which acquires position information serving as a reference point of a moving body, an object storage device which stores objects in correspondence to pieces of display position information based on which the objects are displayed on a plurality of windows of the moving body, a plurality of projecting devices which correspond to the respective windows and project the objects onto the windows to make the objects displayed, and an object distributing device which distributes the objects stored in the object storage device to the plural projecting devices are connected via a network, wherein:
the object distributing device specifies position information of the first window in terms of a travelling direction of the moving body out of the plural windows of the moving body, based on the position information serving as the reference point of the moving body and acquired by the position information acquiring device, specifies a field of view from the window based on the specified position information, acquires the object that is to be displayed on the specified field of view, from the storage device based on the specified field of view and the display position information, distributes the acquired object to the projecting device which projects the object onto the window, and according to speed information of the moving body, distributes the object distributed to the object display device installed on the first window, sequentially to the projecting devices which project the object onto the windows in the rearward of the window in terms of the travelling direction; and
the plural projecting devices project the distributed object onto the corresponding windows to make the object displayed in a superimposed manner on sceneries outside the windows.

11. An object display method in an object display system in which a position information acquiring device which acquires position information serving as a reference point of a moving body, an object storage device which stores objects that are to be displayed on a plurality of object display devices installed on a plurality of windows of the moving body, in correspondence to pieces of display position information of the objects, an object distributing device which distributes the objects stored in the object storage device to the plural object display devices, and the plural object display devices are connected via a network, the method comprising:
a step in which the object distributing device specifies position information of each of the plural windows of the moving body based on the position information serving as the reference point of the moving body and acquired by the position information acquiring device and specifies fields of view from the respective windows based on the pieces of specified position information, acquires the objects that are to be displayed on the specified fields of view, from the storage device based on the specified fields of view and the display position information, and distributes the acquired objects to the object display devices installed on the corresponding windows; and
a step in which the object display devices installed on the respective windows display the distributed objects in a superimposed manner on sceneries outside the windows.

12. An object display method in an object display system in which a position information acquiring device which acquires position information serving as a reference point of a moving body, an object storage device which stores objects that are to be displayed on a plurality of object display devices installed on a plurality of windows of the moving body, in correspondence to pieces of display position information of the objects, an object distributing device which distributes the objects stored in the object storage device to the plural object display devices, and the plural object display devices are connected via a network, the method comprising:
a step in which the object distributing device specifies position information of the first window in terms of a travelling direction of the moving body out of the plural windows of the moving body, based on the position information serving as the reference point of the moving body and acquired by the position information acquiring device, specifies a field of view from the window based on the specified position information, acquires the object that is to be displayed on the specified field of view, from the storage device based on the specified field of view and the display position information, distributes the acquired object to the object display device installed on the window, and according to speed information of the moving body, distributes the object distributed to the object display device installed on the first window, sequentially to the object display devices installed on the windows in the rearward of the window in terms of the travelling direction; and
a step in which the object display devices installed on the respective windows display the distributed object in a superimposed manner on sceneries outside the windows.

13. An object display method in an object display system in which a position information acquiring device which acquires position information serving as a reference point of a moving body, an object storage device which stores objects in correspondence to pieces of display position information based on which the objects are displayed on a plurality of windows of the moving body respectively, a plurality of projecting devices which correspond to the respective windows and project the objects onto the windows to make the objects displayed, and an object distributing device which distributes the objects stored in the object storage device to the plural projecting devices are connected via a network, the method comprising:
a step in which the object distributing device specifies position information of each of the plural windows of the moving body based on the position information serving as the reference point of the moving body and acquired by the position information acquiring device, specifies fields of view from the respective windows based on the pieces of specified position information, acquires the objects that are to be displayed on the specified fields of view, from the storage device based on the specified fields of view and the pieces of display position information, and distributes the acquired objects to the projecting devices which project the objects onto the corresponding windows; and
a step in which the plural projecting devices project the distributed objects onto the corresponding windows to make the objects displayed in a superimposed manner on sceneries outside the windows.

14. An object display method in an object display system in which a position information acquiring device which acquires position information serving as a reference point of a moving body, an object storage device which stores objects in correspondence to pieces of display position information based on which the objects are displayed on a plurality of windows of the moving body, a plurality of projecting devices which correspond to the respective windows and project the objects onto the windows to make the objects displayed, and an object distributing device which distributes the objects stored in the object storage device to the plural projecting devices are connected via a network, the method comprising:
a step in which the object distributing device specifies position information of the first window in terms of a travelling direction of the moving body out of the plural windows of the moving body, based on the position information serving as the reference point of the moving body and acquired by the position information acquiring device, specifies a field of view from the window based on the specified position information, acquires the object that is to be displayed on the specified field of view, from the storage device based on the specified field of view and the display position information, distributes the acquired object to the projecting device which projects the object onto the window, and according to speed information of the moving body, distributes the object distributed to the object display device installed on the first window, sequentially to the projecting devices which project the object onto the windows in the rearward of the window in terms of the travelling direction; and
a step in which the plural projecting devices project the distributed object onto the corresponding windows to make the object displayed in a superimposed manner on sceneries outside the windows.
